# EUROPÄISCHE PATENTSCHRIFT

(11) **EP 2 211 582 B1**
(45) Veröffentlichungstag und Bekanntmachung des Hinweises auf die Patenterteilung: **16.11.2011**
(21) Anmeldenummer: 10000616.2
(22) Anmeldetag: 22.01.2010
(51) Int. Cl.: H04W 72/04

(54) **Verfahren und System zur Positionsbestimmung eines mobilen Endgerätes**
Method and system for determining the position of a mobile terminal
Procédé et système de détermination de la position d'un terminal mobile

(30) Priorität: 23.01.2009 DE 102009005977
(43) Veröffentlichungstag der Anmeldung: 28.07.2010
(73) Patentinhaber: Deutsches Zentrum für Luft- und Raumfahrt e.V., 51147 Köln (DE)
(72) Erfinder: Damman, Armin, 86899 Landsberg a. Lech (DE); Strang, Thomas, 82287 Jesenwang (DE)
(74) Vertreter: Gerstein, Hans Joachim

(56) Entgegenhaltungen:
- EP-A1- 1 229 343
- EP-A2- 1 014 105
- EP-A2- 1 206 152
- DE-A1- 10 222 140
- DE-A1-102006 056 338
- US-A- 5 943 014
- US-A- 5 970 414
- US-A1- 2005 159 174
- US-B2- 7 116 990

## Beschreibung

Die Erfindung betrifft ein Verfahren zur netzwerkseitigen Positionsbestimmung eines mobilen Endgerätes innerhalb eines von weiteren mobilen Endgeräten zur drahtlosen Kommunikation genutzten drahtlosen Netzwerkes.

Die Erfindung betrifft auch ein Funkkommunikationssystem zur Durchführung des Verfahrens.

In drahtlosen Kommunikationssystemen, wie z.B. in einem Mobilfunksystem (GSM, UMTS), ist oft wünschenswert, die genaue Position eines mobilen Endgerätes, welches das von dem drahtlosen Kommunikationssystem zur Verfügung gestellten Funkübertragungsmedium zur drahtlosen Kommunikation nutzt, zu bestimmen. Dabei werden grundsätzlich zwei Arten der Positionsbestimmung unterschieden: aktive Positionsbestimmung und passive Positionsbestimmung.

Bei der aktiven Positionsbestimmung erfolgt die Positionsbestimmung des mobilen Endgerätes innerhalb des Kommunikationssystems unter der Kenntnis des jeweiligen Nutzers, weil er z.B. selbst eine entsprechende Aktion forciert hat. Bei der passiven Positionsbestimmung hingegen erfolgt die Positionsbestimmung des mobilen Endgerätes ohne Wissen des Nutzers, so dass das mobile Endgerät bzw. das Kommunikationssystem ohne entsprechende Anfrage bzw. Wissen des Nutzers die Position ermittelt. Die Funktionalität der aktiven Positionsbestimmung kann z.B. für ortsabhängige Dienste, wie z.B. Werbung eines Geschäftes beim Vorbeigehen an dem entsprechenden Laden, aber auch zur Routenführung und Navigation genutzt werden. Passive Positionsbestimmung dient z.B. den Sicherheitsbehörden zur Überwachung von Personen oder Objekten.

Drahtlose Kommunikationssysteme werden in der Regel durch eine Mehrzahl von Funkkommunikationseinheiten bzw. sogenannten Basisstationen gebildet, mit denen ein mobiles Endgerät zwecks drahtloser Kommunikation mit anderen Teilnehmern in Verbindung steht, sofern es sich in dem entsprechenden Einflussbereich bzw. Sende- und Empfangsbereich der jeweiligen Basisstation befindet. Ein solcher Sende- und Empfangsbereich, der von einer Basisstation gebildet wird, wird umgangssprachlich auch Zelle oder Funkzelle genannt. In der Regel überschneiden sich benachbarte Funkzellen, d.h. im Randbereich einer Funkzelle existieren Bereiche, in denen sowohl der Empfang mit der einen als auch mit der anderen Basisstation möglich ist.

Solche drahtlosen Kommunikationssysteme sind heutzutage hinsichtlich ihrer Datenaberfragungsrate sowie hinsichtlich einer hohen Anzahl von aktiven Nutzern optimiert. Eine solche Optimierung geht jedoch In der Regel einher mit der Erhöhung von Interferenzen, die sich nicht nur auf die Übertragungsqualität auswirken, sondern auch unter anderem äußerst störend sind bei verschiedenen Verfahren der Positionsbestimmung. Bei Interferenzen handelt es sich um Überlagerungen von zwei oder mehreren elektromagnetischen Wellen, die ein Funksignal nicht nur stören, sondern es unter Umständen auch bis zur Unkenntlichkeit verstellen können, Solche Interferenzen entstehen z.B. durch nicht ideal bandbegrenzte Sendesignale oder durch die spektrale Spreizung des Sendesignals aufgrund des Doppeleffektes, Insbesondere in den Randbereichen, in denen sich die Funkzellen überschneiden, ist mit Störungen durch Interferenzen (sogenannte Nachbarkanalstörung) zu rechnen.

Verfahren zur Positionsbestimmung von mobilen Endgeräten sind aus dem Stand der Technik hinreichend bekannt, So lässt sich die Position eines mobilen Endgerätes grundsätzlich dadurch bestimmen, in welcher Funkzelle es eingebucht ist. Eine derartige Positionsangabe ist in der Regel jedoch sehr ungenau, da sie lediglich als Positionsangabe den Raum angibt, der durch die Funkzelle gebildet wird. Eine andere Möglichkeit besteht darin, mittels Triangulation über Antennen benachbarter Basisstationen das Aufenthaltsfenster zu verfeinern bzw. eine absolute Position anzugeben. Dies setzt jedoch voraus, dass sich das mobile Endgerät auch im Empfangsbereich aller beteiligten Basisstationen befindet.

Andere aus dem Stand der Technik zur Positionsbestimmung bekannte Verfahren sind z.B. Time of Arrival (ToA), Time of Difference of Arrival, Angle of Arrival, Angle of Departure und ähnliches. Eines der bekanntesten Verfahren ist dabei das Round-Trip Time of Arrival-Verfahren, bei dem die Laufzeit eines Funksignals von der Basisstation zum mobilen Endgerät und zurück ermittelt wird, um so den Abstand des mobilen Endgerätes von der Basisstation zu ermitteln. Die so ermittelte Positionslösung, die aus einem Abstandskreis um die Basisstation herum besteht, lässt sich dann weiter verfeinern, z.B, mit Hilfe des sogenannten Angle of Arrival-Verfahrens, bei dem der Sende- und Empfangswinkel zu dem mobilen Endgerät ermittelt wird,

Aus der US 7,116,890 B2 ist ein Verfahren zur Positionsbestimmung von mobilen Endgeräten in drahtlosen Kommunikationssystemen bekannt. Dabei sendet das mobile Endgerät eine Positionsbestimmungsanfrage an das Kommunikationssystem, wobei die Anfrage zusätzlich eine Qualitätsinformation bezüglich der zu liefernden Genauigkeit der Positionsbestimmung enthält. Während der Übertragung wird diese Qualitätsinformation ausgelesen und anhand dessen ein geeignetes Netzwerkelement ausgewählt, welches die Positionsbestimmung des mobilen Endgerätes übernimmt. Anhand dieser Qualitätsinformation kann dann auch das zu verwendende Positionsbestimmungsverfiahren ausgewählt werden.

Nachteilig dabei ist insbesondere die Tatsache, dass Störungen, die das Übertragungsmedium an sich betreffen, die Genauigkeit der Positionsbestimmung verschlechtern und deshalb unter Umständen die geforderte Genauigkeit nicht erreicht werden kann.

In der US 6,901,284 wird ein Verfahren zur Positionsbestimmung und - verfolgung vieler mobiler Endgeräte offenbart. Dabei senden die mobilen Endgeräte auf Anforderung des Systems ihre eigene Position.

Die US 5,943,014 offenbart ein Verfahren zum Bestimmen der Positionen einer mobilen Station innerhalb eines Mobilfunksystems, wobei zunächst ein Signal mit einem geringeren Energielevel ausgesendet wird und in Abhängigkeit davon dann die Obertragungsenergie erhöht wird. Anhand der Signale mit erhöhtem Energielevel wird dann die Position bestimmt.

Aus der US 5,970,414 ist des Weiteren ein Verfahren zur Ermittlung der Position eines Mobiltelefons bekannt, bei dem die Position anhand des ausgesendeten Signals des Mobiltelefons ermittelt wird, wobei die in der Nähe befindlichen Basisstationen während dieser Zeit ihre Sendeenergie verringern.

Es ist daher Aufgabe der vorliegenden Erfindung, ein verbessertes Verfahren und System anzugeben, mit dem die Genauigkeit der Positionsbestimmung innerhalb von drahtlosen Kommunikationasystemen erhöht werden kann.

Die Aufgabe wird mit dem Verfahren der eingangs genannten Art erfindungsgemäß gelöst durch Zuweisen von Netzwerkressourcen des drahtlosen Netzwerkes an die mobilen Endgeräte in Abhängigkeit einer die Genauigkeit der Positionsbestimmung betreffenden Qualitätsinformatlon und Durchführen der Positionsbestimmung des zu lokalisierenden mobilen Endgerätes nach der Zuweisung.

Durch die Qualitätsinformation wird die Genauigkeit der Positionsbestimmung angegeben. In Abhängigkeit dieser Qualitätsinformation werden nun die Netzwerkressourcen des drahtlosen Kommunikationssystems an die mobilen Endgeräte derart zugewiesen, dass Je nach Qualitätsanforderung das drahtlose Netzwerk entweder hinsichtlich der Datenübertragung oder hinsichtlich der Genauigkeit der Positionsbestimmung optimiert wird. So ist z.B. denkbar, dass bei einer sehr hohen Qualitätsanforderung an die Positionsbestimmung die Netzressourcen so verteilt werden, dass eine möglichst geringe Störung im Übertragungsmedium für das zu lokalisierende mobile Endgerät auftritt. Nach Zuweisen der Netzwerkressourcen in Abhängigkeit der Qualitätsanforderung wird nun die Position des zu lokalisierenden mobilen Endgerätes mittels bekannter Verfahren bestimmt. Eine solche Qualitätsinformation kann z.B. der "mittlere quadratische Fehler" (Mean Square Error - MSE) sein.

Besonders vorteilhaft ist es dabei, wenn die optimierte Zuweisung der Netzwerkressourcen nur temporär erfolgt, d.h. nur für die Zeit der Positionsbestimmung, so dass nach Beendigung der Positionsbestimmung die alten auf Datendurchsatz optimierten Zuweisungen wieder hergestellt werden. Somit kann erreicht werden, dass die mit der Erhöhung der Genauigkeit der Positionsbestimmung einhergehende Verringerung des Datendurchsatzes nur für einen kurzen Zeitraum sich negativ auf die Verbindungsgeschwindigkeit auswirkt.

Ganz besonders vorteilhaft ist es, wenn in dem drahtlosen Netzwerk die Kommunikationskanäle, d.h. die einzelnen unterschiedlichen Frequenzen, auf denen die mobilen Endgeräte senden und empfangen können, in Abhängigkeit der Qualltatainformation entsprechend zugewiesen werden. So ist es denkbar, dass der Kanalabstand, d.h. der Abstand zwischen den einzelnen belegten Frequenzen, entsprechend so gewählt wird, dass ein möglichst großer Kanalabstand der anderen mobilen Endgeräte zu dem zu lokalisierenden mobilen Endgerät hergestellt wird, um so auftretende Interferenzen zu verringern. Denn durch die Verringerung der Interferenzen wird die Genauigkeit der zur Positionsbestimmung verwendeten Verfahren entsprechend erhöht, so dass letztlich eine höhere Genauigkeit der Positionsbestimmung erreicht wird. Dabei ist es insbesondere denkbar, dass ein möglichst großer Kanalabstand zu dem zu lokalisierenden Endgerät gewählt wird, während die anderen mobilen Endgeräte zueinander einen eher geringeren Kanalabstand aufweisen, was sich zwar nachteilig auf den Datendurchsatz auswirkt, jedoch nur temporär für die Zeit der Positionsbestimmung wirkt.

Besteht das drahtlose Netzwerk dabei aus einer Mehrzahl von durch die Basisstationen gebildeten Funkzellen, so kann dieser Kanalabstand nicht nur hinsichtlich der eigenen Funkzelle des zu lokalisierenden mobilen Endgerätes entsprechend optimiert werden, sondern auch entsprechend in den benachbarten Funkzellen, so dass der Kanalabstand zwischen dem zu lokalisierenden mobilen Endgerät und den anderen mobilen Endgeräten, die sich in einer anderen Funkzelle befinden, ebenfalls vergrößert wird. Dieser Abstand kann dabei selbstverständlich ebenfalls in Abhängigkeit der Qualitätsinformation gewählt werden.

Des Weiteren ist es besonders vorteilhaft, wenn die Sendeleistungen der einzelnen mobilen Endgeräte entsprechend in Abhängigkeit der Qualitäteinformation gewählt werden, um so ebenfalls bei einer gewünschten hohen Genauigkeit der Positionsbestimmung entsprechend die Netzwerkressourcen zu verteilen. So kann zur Erhöhung der Genauigkeit der Positionsbestimmung die Sendelelstung des zu lokalisierenden mobilen Endgerätes erhöht werden (höhere Nutzsignalleistung am Empfänger), während die anderen mobilen Endgeräte den ihre Sendeleistung reduziert werden (verringerte Interterenzleistung). Dadurch wird die Genauigkeit der Positionsbestimmungsverfahren erheblich erhöht. Der dabei verringerte Datendurchsatz der anderen mobilen Endgeräte wird für die Zeit der Positionsbestimmung in Kauf genommen,

Auch hier ist eine über mehrere Funkzellen verteilte Zuweisung der Netzwerkressource denkbar, so dass die mobilen Endgeräte in den Nachbarzellen ebenfalls in ihrer Sendeleistung reduziert werden, um die Genauigkeit der Positionsbestimmung zu erhöhen.

Bei der Funkzellen übergreifenden Verteilung der Netzwerkressourcen ist es ganz besonders vorteilhaft, wenn der Kommunikationskanal, auf dem das zu lokalisierende mobile Endgerät mit seiner Basisstation in Verbindung steht, in den benachbarten Funkzellen nicht vergeben wird, um so die Nachbarkanalstörung bei der Positionsbestimmung des zu lokalisierenden mobilen Endgerätes entsprechend zu verringern.

Insbesondere zur passiven Positionsbestimmung ist es besonders vorteilhaft, wenn das zu lokalisierende mobile Endgerät eine Positionsbestimmungsanfrage an die Basisstation der Funkzelle sendet, mit der es in Verbindung steht. Das Netzwerk kann daraufhin die Zuweisung der Netzwerkressourcen an die mobilen Endgeräte entsprechend der Qualitätsanforderung zuweisen bzw. optimieren. Höchst vorteilhaft Ist es dabei, wenn in der Positionsbestimmungsanfrage die Qualltätsinformation enthalten ist, in deren Abhängigkeit die Zuweisung erfolgt. Somit kann das mobile Endgerät selbst bestimmen, in welcher Genauigkeit die Positionsbestimmung durchgeführt werden soll, die sich wie vorstehend erwähnt, im Spannungsverhältnis zwischen Genauigkeit und Datendurchsatz bewegt.

Die Aufgabe wird auch mit einem Funkkommunikationssystem zur Durchführung des vorstehenden Verfahrens gelöst. Vorteilhafte Ausgestaltungen finden sich in den entsprechenden Unteransprüchen.

Die Erfindung wird anhand der beigefügten Zeichnungen beispielhaft näher erläutert. Es zeigen;
- Figur 1: - schematische Darstellung eines drahtlosen Kommunika- tionsnetzwerkes mit zwei Funkzellen;
- Figur 2a - 2d -: Ressourcen-Management am Beispiel zweier Mobilfunk- zellen;

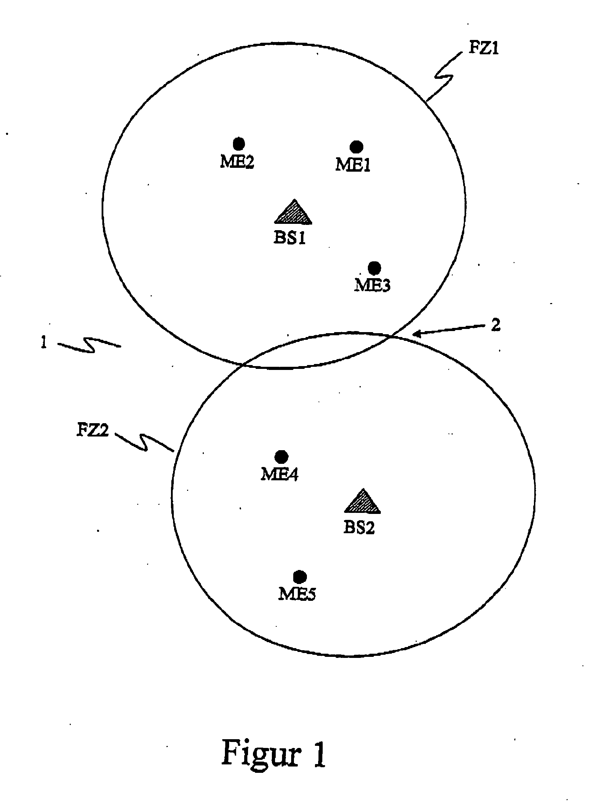

Figur 1 zeigt eine schematische Darstellung eines drahtlosen Kommunikationsnetzwerkes 1, das in diesem Ausführungsbeispiel aus zwei Funkzellen FZ1, FZ2 besteht. Die beiden Funkzellen FZ1 und FZ2 werden dabei durch ihre jeweiligen Basisstationen BS1 und BS2 bebildet. In der Funkzelle FZ1 befinden sich drei mobile Endgeräte ME1, ME2, ME3, die mit der Basisstation BS1 der Funkzelle FZ1 in Verbindung stehen und zur drahtlosen Kommunikation mit anderen Teilnehmern vorgesehen sind. In der zweiten Funkzelle FZ2 befinden sich zwei mobile Endgeräte ME4 und ME5, die mit der zu der Funkzelle FZ2 gehörenden Basisstation BS2 zwecks drahtloser Kommunikation in Verbindung stehen.

Wie In Figur 1 ersichtlich, überschneiden sich die beiden Funkzellen FZ1 und FZ2 in einem Bereich 2, in dem sowohl das Signal von der Basisstation BS1 als auch das Signal von der Basisstation BS2 empfangbar ist. Gerade in diesem Überschneidungsbereich 2 ist mit Interferenzen zu rechnen.

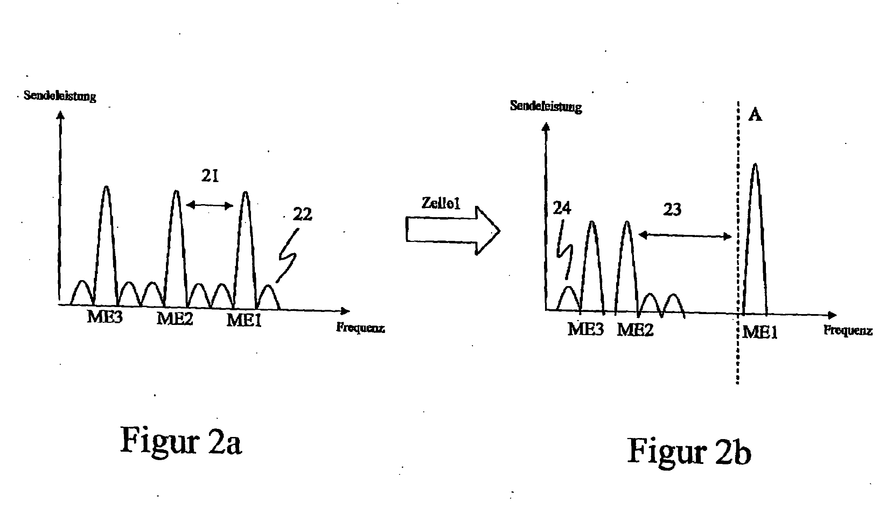

Figuren 2a bis 2d zeigen das Prinzip des Ressourcen-Managements am Beispiel zweier Mobilfunkzellen, wie sie in Figur 1 zu finden sind. In den dargestellten Diagrammen ist auf der X-Achse die Frequenz des jeweiligen mobilen Endgerätes abgetragen, während auf der Y-Achse die Sendeleistung steht.

Figur 2a zeigt dabei die Frequenzverteilung bzw. die Zuweisung der Kommunikationskanäle der einzelnen drei mobilen Endgeräte ME1, ME2 und ME3 der ersten Zellen FZ1. Die Frequenzen der drei mobilen Endgeräte sind dabei derart gewählt, dass deren Kanalabstand 21 in Bezug auf die Anzahl der aktiven Teilnehmer in dieser Funkzelle FZ1 maximiert ist. Durch einen maximalen Kanalabstand wird erreicht, dass die Interferenzen möglichst minimal gehalten werden, damit möglichst wenig Störungen auftreten und der Datendurchsatz entsprechend hoch ist. Dass die Störungen dabei dennoch derart groß sind, dass der Datendurchsatz nicht seinen theoretischen Wert erreicht, wird dabei in Kauf genommen. Um eine möglichst hohe Genauigkeit bei der Positionsbestimmung zu erreichen, ist es jedoch wünschenswert, diese Störungen weiter zu verringern.

Figur 2b zeigt das gleiche Diagramm wie aus Figur 2a, wobei jedoch die Netzwerkressourcen, in diesem Ausführungsbeispiel die Sendeleistung und der Kanalabstand bzw. die entsprechende Frequenz, hinsichtlich der Genauigkeit der Positionsbestimmungen verändert wurden. So wurde der Kanalabstand 23 zwischen dem zu lokalisierenden mobilen Endgerät ME1 und den beiden anderen mobilen Endgeräten ME2 und ME3 derart vergrößert, dass die Interferenzen im Bereich des Kanals des mobilen Endgerätes ME1 stark verringert wurden. Dabei wurde jedoch der Kanalabstand zwischen den beiden weiteren mobilen Endgeräten ME2 und ME3 stark verkleinert, so dass hier stärker mit Interferenzen zu rechnen ist und somit der Datendurchsatz dieser beiden mobilen Endgeräte aufgrund der Störungen sinkt. Die Netzwerkressourcen wurden somit in Bezug auf die Genauigkeit der Positionsermittlung des mobilen Endgerätes ME1 optimiert.

Des Weiteren ist zu erkenne, dass die Sendeleistung des mobilen Endgerätes ME1, dessen Position bestimmt werden soll, erhöht wurde, während die Sendeleistungen der beiden anderen mobilen Endgeräte ME2 und ME3 verkleinert wurde.

Dadurch kann ebenfalls die Zuverlässigkeit der Positfonsermittlungsverfahren, die auf das mobile Endgerät ME1 angewendet werden, stark erhöht werden.

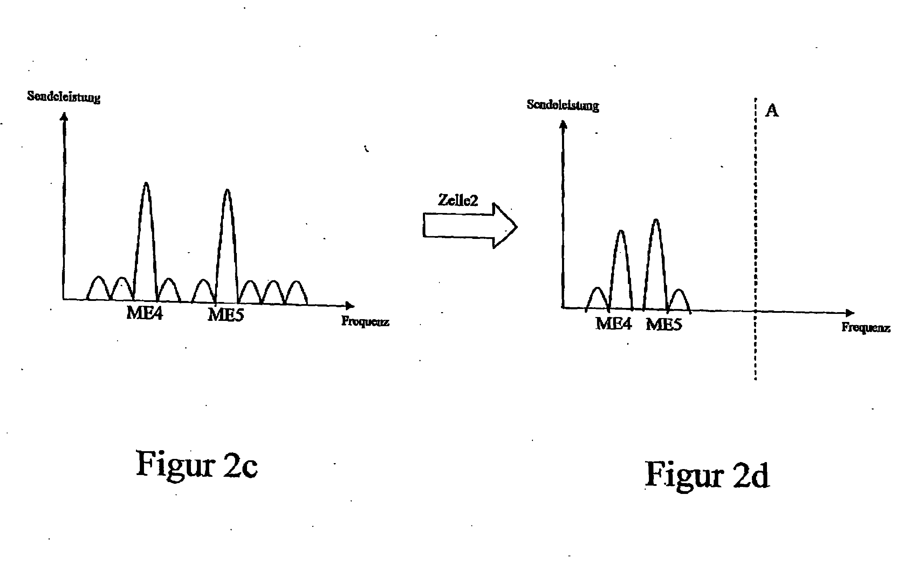

Figur 2c zeigt ein Diagramm, wie es in Figur 2a zu finden ist. Die beiden hier dargestellten mobilen Endgeräte ME4 und ME5 befinden sich dabei in der Nachbarzelle FZ2, die sich durch Nachbarkanalstörungen (Interferenzen) störend auf den Empfang der drei mobilen Endgeräte ME1, ME2 und ME3 der benachbarten Funkzelle FZ1 auswirken, Das Diagramm in Figur 2c zeigt dabei eine Verteilung der Netzwerkressourcen, wie sie bei der Optimierung hinsichtlich der Erhöhung des Datendurchsatzes zu finden ist. So ist der Kanalabstand zwischen den beiden mobilen Endgeräten ME4 und ME5 maximiert.

Werden nun die Netzwerkressourcen in der ersten Funkzelle FZ1 hinsichtlich der Genauigkeit der Positionsbestimmungen optimiert, wie dies in Figur 2b beispielhaft angedeutet wurde, so kann dies, um weiterhin die Nachbarkanalstörung zu minimieren, auch in der benachbarten Funkzelle FZ2, wie dies in Figur 2d gezeigt ist, erfolgen.

Figur 2d zeigt dabei in dem Diagramm, dass die beiden mobilen Endgeräte ME4 und ME5 der Nachbarzelle FZ2 einen Kanal zugewiesen bekommen haben, der einen möglichst großen Abstand zu dem Kanal hat, der dem zu lokalisierenden mobilen Endgerät ME1 in der ersten Funkzelle FZ1 zugewiesen ist. Dadurch können Nachbarkanalstörungen innerhalb dieser Frequenz aus der benachbarten Funkzelle FZ2 die Positionsbestimmung des mobilen Endgerätes ME1 in der ersten Funkzelle FZ1 In der Genauigkeit nicht beeinträchtigen. Wahlweise kann ebenfalls die Sendeleistungen der beiden mobilen Endgeräte ME4 und ME5 verringert werden.

## Patentansprüche

1. Verfahren zur Positionsbestimmung eines mobilen Endgerätes (ME1) innerhalb eines von weiteren mobilen Endgeräten (ME2 bis ME5) zur drahtlosen Kommunikation genutzten drahtlosen Netzwerkes (1), **gekennzeichnet durch**, Zuweisen von Netzwerkressourcen des drahtlosen Netzwerkes (1) an die mobilen Endgeräte (ME1 bis ME5) in Abhängigkeit einer die Genauigkeit der Positionsbestimmung betreffenden Qualitatainformation und Durchführen der Positionsbestimmung des zu lokalisierenden mobilen Endgerätes (ME1) nach der Zuweisung.

2. Verfahren nach Anspruch 1, **gekennzeichnet durch** temporäres Zuweisen der Netzwerkressourcen so lange, bis die Positionsbestimmung durchgeführt ist, und oder **durch** Zuweisen von Kommunikationskanälen, Frequenzkanälen, Zeitschlitzen und/oder Spreizcodes als Netzwerkressourcen an die mobilen Endgeräte (ME1 bis ME5).

3. Verfahren nach Anspruch 2, **gekennzeichnet durch** Zuweisen der Kommunikationskanäle derart, dass der Kanalabstand (23) zwischen dem zu lokalisierenden mobilen Endgerät (ME1) und mindestens einem weiteren mobilen Endgerät (ME2 bis ME5) in Abhängigkeit der Qualitätsinformationen gewählt und/oder maximiert wird.

4. Verfahren einem der vorhergehenden Ansprüche, **gekennzeichnet durch** Zuweisen von Sendeleistungen als Netzwerkressourcen an die mobilen Endgeräte (ME1 bis ME5) derart, dass die Sendeleistungen mindestens eines mobilen Endgerätes (ME1 bis ME5) in Abhängigkeit der Qualitätsinformation gewählt wird und/oder die Sendeleistung des zu lokalisierenden mobilen Endgerätes (ME1) in Abhängigkeit der Qualitätsinformation erhöht wird und/oder die Sendeleistung mindestens eines weiteren mobilen Endgerätes (ME2 bis ME5) in Abhängigkeit der Qualitätsinformation
verringert wird.

5. Verfahren nach einem der vorhergehenden Ansprüche, **gekennzeichnet durch** Senden einer Positionsbestimmungsanfrage von dem zu lokallsierenden mobilen Endgerätes (ME1) an eine Basisstation (BS1), um die Positionsbestimmung durchführen zu lassen.

6. Verfahren nach einem der vorhergehenden Ansprüche, **dadurch gekennzeichnet, dass** das drahtlose Netzwerk (1) aus einer Mehrzahl von Funkzellen (FZ1, FZ2) mit jeweils einer Basisstation (BS1, BS2) besteht und die mobilen Endgeräte (ME1 bis ME5) mit einer Basisstation (BS1, BS2) der entsprechenden Funkzellen (FZ1, FZ2) in Verbindung stehen, wobei die Zuweisung der Netzwerkressourcen innerhalb der Funkzelle (FZ1) erfolgt, mit deren Basisstation (BS1) das zu lokalisierende mobile Endgerät (ME1) in Verbindung steht,

7. Verfahren nach Anspruch 6, **dadurch gekennzeichnet, dass** die Zuweisung der Netzwerkressourcen innerhalb mindestens einer weiteren Funkzelle (FZ2) erfolgt, die mit der Funkzelle (FZ1), mit deren Basisstation (BS1) das zu lokalisierende mobile Endgerät (ME1) in Verbindung steht, benachbart ist.

8. Verfahren nach Anspruch 6 oder 7, **dadurch gekennzeichnet, dass** In mindestens einer benachbarten Funkzelle (FZ2) der Kommunikationskanal, der dem zu lokalisierenden mobilen Endgerät (ME1) in seiner Funkzelle (FZ1) zugewiesen ist, anderen mobilen Endgeräten (ME4, ME5) nicht zugewiesen wird.

9. Funkkommunikationssystem zur Durchführung des Verfahren nach einem der vorhergehenden Ansprüche mit mindestens einer Funkkommunikationseinheit (BS1, BS2) zur drahtlosen Kommunikation zwischen mobilen Endgeräten (ME1 bis ME5) innerhalb eines gemeinsam genutzten drahtlosen Netzwerkes (1), wobei die Funkkommunikationseinheit (BS1, BS2) zum Zuweisen von Netzwerkressourcen des drahtlosen Netzwerkes (1) an die mobilen Endgeräte (ME1 bis ME5) in Abhängigkeit einer die Genauigkeit der Positionsbestimmung betreffende Qualitätsinformation und zum Durchführen der Positionsbestimmung eines zu lokalisierenden mobilen Endgerätes (ME1) eingerichtet ist.

10. Funkkommunikationssystem nach Anspruch 9, **dadurch gekennzeichnet, dass** die Funkkommunikationseinheit (BS1) zum Empfangen einer von dem zu lokalisierenden mobilen Endgerät (ME1) gesendeten Positionsbestimmungsanfrage, welche die Qualitätsinformation enthält und zur Extraktion der Qualitätsinformation aus der Positionsbestimmungsanfrage eingerichtet ist, wobei in Abhängigkeit der Positionsbestimmungsanfrage die Positionsbestimmung durchgeführt wird.

11. Funkkommunikationssystem nach Anspruch 9 oder 10, **dadurch gekennzeichnet, dass** die Funkkommunikationseinheit (BS1, BS2) zum Zuwelsen von Kommunikationskanälen und/oder von Sendeleistungen an mindestens ein mobiles Endgerät (ME1 bis ME5) in Abhängigkeit der Qualitätsinformation eingerichtet ist.

## Claims

1. Method for determining the position of a mobile terminal (ME1) within a wireless network (1) utilized for wireless communication by other mobile terminals (ME2 to ME5), **characterized by** assigning network resources of the wireless network (1) to the mobile terminals (ME1 to ME5) in dependence on a quality information item concerning the accuracy of the position determination and performing the determination of the position of the mobile terminal (ME1) to be located after the assignment.

2. Method according to Claim 1, **characterized by** temporarily assigning the network resources until the determination of the position has been performed, and/or by assigning communication channels, frequency channels, time slots and/or spread-spectrum codes as network resources to the mobile terminals (ME1 to ME5).

3. Method according to Claim 2, **characterized by** assigning the communication channels in such a manner that the channel spacing (23) between the mobile terminal (ME1) to be located and at least one further mobile terminal (ME2 to ME5) is selected and/or maximized in dependence on the quality information.

4. Method according to one of the preceding claims, **characterized by** assigning transmit powers as network resources to the mobile terminals (ME1 to ME5) in such a manner that the transmit power of at least one mobile terminal (ME1 to ME5) is selected in dependence on the quality information and/or the transmit power of the mobile terminal (ME1) to be located is increased in dependence on the quality information and/or the transmit power of at least one further mobile terminal (ME2 to ME5) is reduced in dependence on the quality information.

5. Method according to one of the preceding claims, **characterized by** transmitting a position determination request from the mobile terminal (ME1) to be located to a base station (BS1) in order to allow the performance of the position determination.

6. Method according to one of the preceding claims, **characterized in that** the wireless network (1) consists of a multiplicity of radio cells (FZ1, FZ2) having in each case one base station (BS1, BS2) and the mobile terminals (ME1 to ME5) are in communication with a base station (BS1, BS2) of the corresponding radio cells (FZ1, FZ2), the assignment of the network resources being effected within the radio cell (FZ1) with the base station (BS1) of which the mobile terminal (ME1) to be located is in communication.

7. Method according to Claim 6, **characterized in that** the assignment of the network resources is effected within at least one further radio cell (FZ2), which is adjacent to the radio cell (FZ1) with the base station (BS1) of which the mobile terminal (ME1) to be located is in communication.

8. Method according to Claim 6 or 7, **characterized in that** in at least one adjacent radio cell (FZ2), the communication channel which is assigned to the mobile terminal (ME1) to be located in its radio cell (FZ1) is not assigned to other mobile terminals (ME4, ME5).

9. Radio communication system for performing the method according to one of the preceding claims comprising at least one radio communication unit (BS1, BS2) for wireless communication between mobile terminals (ME1 to ME5) within a commonly used wireless network (1), the radio communication unit (BS1, BS2) being set up for assigning network resources of the wireless network (1) to the mobile terminals (ME1 to ME5) in dependence on a quality information item concerning the accuracy of the position determination and for performing the determination of the position of a mobile terminal (ME1) to be located.

10. Radio communication system according to Claim 9, **characterized in that** the radio communication unit (BS1) is set up for receiving a position determination request sent by the mobile terminal (ME1) to be located, which request contains the quality information and is set up for extracting the quality information from the position determination request, the position determination being performed in dependence on the position determination request.

11. Radio communication system according to Claim 9 or 10, **characterized in that** the radio communication unit (BS1, BS2) is set up for assigning communication channels and/or transmit powers to at least one mobile terminal (ME1 to ME5) in dependence on the quality information.

## Revendications

1. Procédé pour déterminer la position d'un terminal mobile (ME1) au sein d'un réseau sans fil (1) utilisé par d'autres terminaux mobiles (ME2 à ME5) pour les communications sans fil, **caractérisé par** l'allocation de ressources de réseau du réseau sans fil (1) aux terminaux mobiles (ME1 à ME5) en fonction d'une information de qualité concernant la précision du positionnement et par de la détermination de position et par l'exécution de la détermination de position du terminal mobile (ME1) à localiser après l'allocation.

2. Procédé selon la revendication 1, **caractérisé par** l'allocation temporaire des ressources réseau tant que la détermination de position n'a pas été effectuée et/ou par l'allocation de canaux de communication, de canaux de fréquence, de codes temporels et/ou d'étalement en tant que ressources réseau aux terminaux mobiles (ME1 à ME5).

3. Procédé selon la revendication 2, **caractérisé par** l'allocation des canaux de communication de telle manière que l'espacement des canaux (23) entre l'appareil mobile (ME1) à localiser et au moins un autre appareil mobile (ME2 à ME5) est sélectionné en fonction des informations de qualité et/ou est maximisé.

4. Procédé selon l'une des revendications précédentes, **caractérisé par** l'allocation de puissances d'émission en tant que ressources réseau aux terminaux mobiles (ME1 à ME5) de telle manière que la puissance d'émission d'au moins un terminal mobile (ME1 à ME5) soit sélectionnée en fonction de l'information de qualité et/ou que la puissance d'émission du terminal mobile (ME1) à localiser soit augmentée en fonction de l'information de qualité et/ou que la puissance d'émission d'au moins un autre terminal mobile (ME2 à ME5) soit diminuée en fonction de l'information de qualité.

5. Procédé selon l'une des revendications précédentes, **caractérisé par** l'envoi d'une demande de détermination de position par le terminal mobile (ME1) à localiser à une station de base (BS1) afin de faire exécuter la détermination de position.

6. Procédé selon l'une des revendications précédentes, **caractérisé en ce que** le réseau sans fil (1) est constitué d'une pluralité de cellules radio (FZ1, FZ2) comprenant chacune une station de base (BS1, BS2) et **en ce que** les terminaux mobiles (ME1 à ME5) communiquent avec une station de base (BS1, BS2) des cellules radio correspondantes (FZ1, FZ2), dans lequel l'allocation des ressources réseau s'effectue à l'intérieur de la cellule radio (FZ1) avec la station de base (BS1) de laquelle communique le terminal mobile (ME1) à localiser.

7. Procédé selon la revendication 6, **caractérisé en ce que** l'allocation des ressources radio s'effectue à l'intérieur d'au moins une autre cellule radio (FZ2) qui est voisine de la cellule radio (FZ1) avec la station de base (BS1) de laquelle communique le terminal mobile (ME1) à localiser.

8. Procédé selon la revendication 6 ou 7, **caractérisé en ce que**, dans au moins une cellule voisine (FZ2), le canal de communication qui est alloué au terminal mobile (ME1) à localiser dans sa cellule radio (FZ1), n'est pas alloué à d'autres terminaux mobiles (ME4, ME5).

9. Système de communication radio destiné à mettre en oeuvre le procédé selon l'une des revendications précédentes comprenant au moins une unité de communication radio (BS1, BS2) pour les communications sans fil entre des terminaux mobiles (ME1 à ME5) au sein d'un réseau sans fil (1) utilisé en commun, dans lequel l'unité de communication radio (BS1, BS2) est apte à allouer des ressources réseau du réseau sans fil (1) aux terminaux mobiles (ME1 à ME5) en fonction de la précision de l'information de qualité concernant la détermination de position, et exécuter la détermination de position d'un terminal mobile (ME1) à localiser.

10. Système de communication radio selon la revendication 9, **caractérisé en ce que** l'unité de communication radio (BS1) est apte à recevoir une demande de détermination de position envoyée par le terminal mobile (ME1) à localiser, laquelle demande contient l'information de qualité, et à extraire l'information de qualité de la demande de détermination de position, dans lequel la détermination de position est exécutée en fonction de la demande de détermination de position.

11. Système de communication radio selon la revendication 9 ou 10, **caractérisé en ce que** l'unité de communication radio (BS1, BS2) est apte à allouer des canaux de communication et/ou des puissances d'émission à au moins un terminal mobile (ME1 à MES) en fonction de l'information de qualité.
